# EUROPEAN PATENT APPLICATION

(11) **EP 4 575 279 A1**
(43) Date of publication of application: **25.06.2025**
(21) Application number: 24195829.7
(22) Date of filing: 22.08.2024
(51) Int. Cl.: F16K 5/06, F16K 11/087, F16K 27/06

(54) **BALL VALVE, PARTICULARLY FOR USE IN THE AIR-CONDITIONING AND REFRIGERATION SECTORS**

(30) Priority: 20.12.2023 IT 202300005373 U
(71) Applicant: Olab S.r.l., 25030 Torbole Casaglia (Brescia) (IT)
(72) Inventor: BOTTURA, Cesare, 25121 BRESCIA (IT)
(74) Representative: Modiano, Micaela Nadia

(57) **Abstract**

A ball valve (100) for use in the air-conditioning and refrigeration sectors, which comprises a valve body (1) with a first and a second way arranged mutually opposite and a third way arranged according to an axis perpendicular to the axis of the first and second way, the valve body (1) being provided with an accommodation seat (2) for a ball (3), a stem (5) being connected to the ball (3), through the valve body (1), for actuating the ball, a sleeve (7) being coupled at one end of the valve body (1), with the interposition of O-rings (10, 11) arranged in seats that are completely closed when the sleeve (7) is coupled to the valve body (1), the stem (5) being adapted to allow, when it is arranged in a first position, a passage of fluid from the third way to the first way and, when arranged in a second position, rotated 90 degrees with respect to the first position, to allow a passage of fluid from the third way to the second way.

## Description

The present invention relates to a ball valve, particularly for the air-conditioning and refrigeration sectors.

More specifically, the invention relates to a flanged ball valve for the air-conditioning and refrigeration sectors.

As is known, a ball valve is a device used for shutting off branches or parts of a circuit. The function of the valve is to block or allow the flow of fluid to the pipes connected to the valve. There are different types of ball valve and their use is very widespread in many and varied sectors. According to the sector of use, the entry/exit connections and the type of materials used may vary.

In the sector of air-conditioning and refrigeration, the valves used can be of the following types:
- ball valve with welded connections.

This device is composed of a body into which the following are inserted in succession: a sealing berth made of PTFE, an actuation stem provided with sealing gaskets, a perforated ball, and an additional sealing berth.

The components are then sealed inside the valve by screwing a sleeve that, once in abutment on the end of the valve body, presses the ball onto the berths, in so doing generating the ball seal.

By rotating the actuation stem by 90°, the valve can be moved from the closed position to an open condition, i.e. to allow flow, and vice versa.

Conventional valves are usually constituted by a body and a sleeve made of brass and pipes made of copper.

At the ends of the pipes there is a flaring of the diameter which allows the installation technician to insert the copper pipe to be connected to the valve and weld/braze it with weld filler material.

The seal between the body and the sleeve is usually provided using TIG welding (after screwing up to abutment); the actuation stem is sealed with a pair of O-rings made of elastomeric material.

Valves of this type exhibit the following problems, however.

Firstly, in the assembly step at the product manufacturers, there can be a great many discards if the TIG welding process is not kept under control.

In fact, during the sealing between body and sleeve, if the welding parameters are not precise and/or the valve is not correctly cooled by flushing the inside with cold gas, the high temperatures can damage (melt or deform) the sealing berths of the ball and the O-ring sealing of the actuation stem.

If the above-mentioned sealing elements are damaged, the seal of the valve is compromised and the valve has to be rejected.

Furthermore, in the assembly step at the site of final installation, the valve could be damaged by the welding/brazing of the connection pipes.

At the time of installation the operator will need to insert a copper pipe to be connected into the pocket present at the ends of the valve.

The operator will then execute the operation to weld the two pipes with weld filler material, usually silver alloy or copper/phosphorus alloy. This operation must be done while enfolding the valve body in a wetted rag so as to keep the component cold and directing the welding torch outward (not in the direction of the valve body).

If the above contrivances are not followed, the result will be the same as described previously, and therefore the valve will be unusable.

Furthermore, during operation this type of valve may over time be susceptible to leaks from TIG welds, in particular when used with R744 gas at high pressure (up to 150 bar).

In fact TIG welds are tested during production of the valve, but they can have non-visible "blisters" inside which under conditions of high pressure may expand until the weld itself fails, in so doing compromising the seal between body and sleeve.

There are also ball valves with threaded ends, which have the same components as those described previously, but connection to the system is done with female or male threadings.

These valves also have a TIG-welded body and sleeve and they run into the same problems mentioned previously.

By contrast, they do not exhibit problems of overheating when they are being connected by the operator, but since they still have threaded connections it is necessary to take great care in that the threadings, if not correctly isolated using sealants or gaskets, may lead to leaks of coolant gas.

Leakage of coolant gas must be avoided in all these types of valves in any case, since in addition to being expensive the gases used in some cases are highly pollutant. Furthermore, once the gas has exited from an air-conditioning/refrigerating circuit, the functionality of the apparatus is compromised and it is necessary to recharge it.

The aim of the present invention is to provide a ball valve for use in the air-conditioning and refrigeration sectors, which solves the drawbacks of conventional valves and which makes it possible to divert the flow from one direction to the other in an extremely simple manner.

Within this aim, an object of the present invention is to provide a ball valve for use in the air-conditioning and refrigeration sectors, that can prevent leaks between the body and the sleeve of the valve.

Another object of the present invention is to provide a ball valve for the air-conditioning and refrigeration sectors, in which the operation conducted by the end user can be done without directly welding/brazing the connection pipes, and therefore without the risk of overheating and damaging the sealing element of the ball valve.

Another object of the present invention is to provide a ball valve for use in the air-conditioning and refrigeration sectors, wherein the body and the sleeve can be made both of brass and in stainless steel and wherein the sealing gaskets can be provided with differentiated blends according to compatibility with the various refrigerant fluids.

Another object of the present invention is to provide a ball valve that is highly reliable, easily and practically implemented and of low cost.

This aim and these and other objects of the invention are achieved by a ball valve for use in the air-conditioning and refrigeration sectors, which comprises a valve body with a first and a second way arranged mutually opposite and a third way arranged according to an axis perpendicular to the axis of said first and second way, said valve body being provided with an accommodation seat for a ball, a stem being connected to said ball, through said valve body, for actuating said ball, a sleeve being coupled at one end of said valve body, with the interposition of O-rings arranged in seats that are completely closed when said sleeve is coupled to said valve body, said stem being adapted to allow, when it is arranged in a first position, a passage of fluid from said third way to said first way and, when arranged in a second position, rotated 90 degrees with respect to said first position, to allow a passage of fluid from said third way to said second way.

Further characteristics and advantages of the invention will become better apparent from the description of a ball valve according to the present invention, which is illustrated for the purposes of non-limiting example in the accompanying drawings wherein:

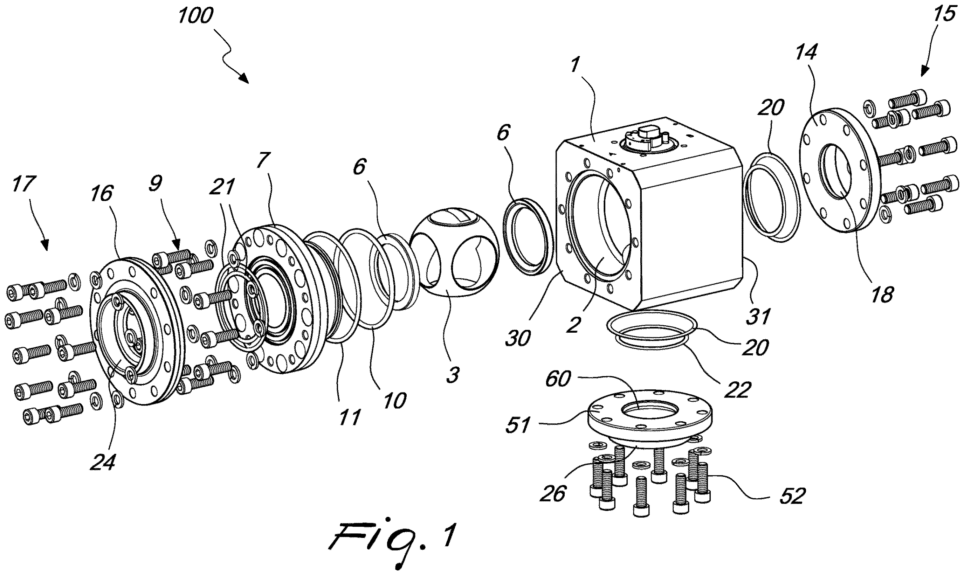

Figure 1 is an exploded perspective view of the ball valve according to the present invention;

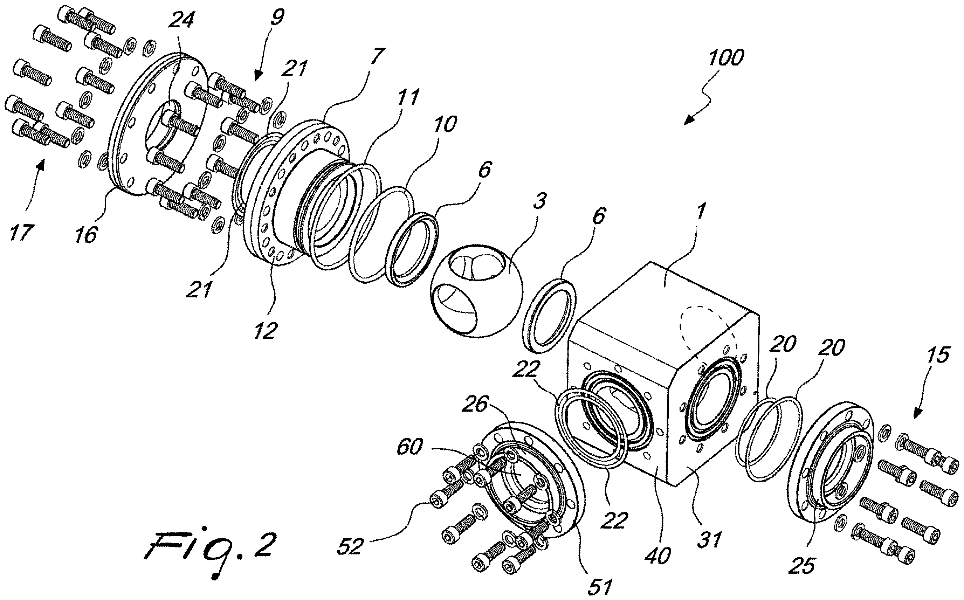

Figure 2 is an additional exploded perspective view of the ball valve according to the present invention;

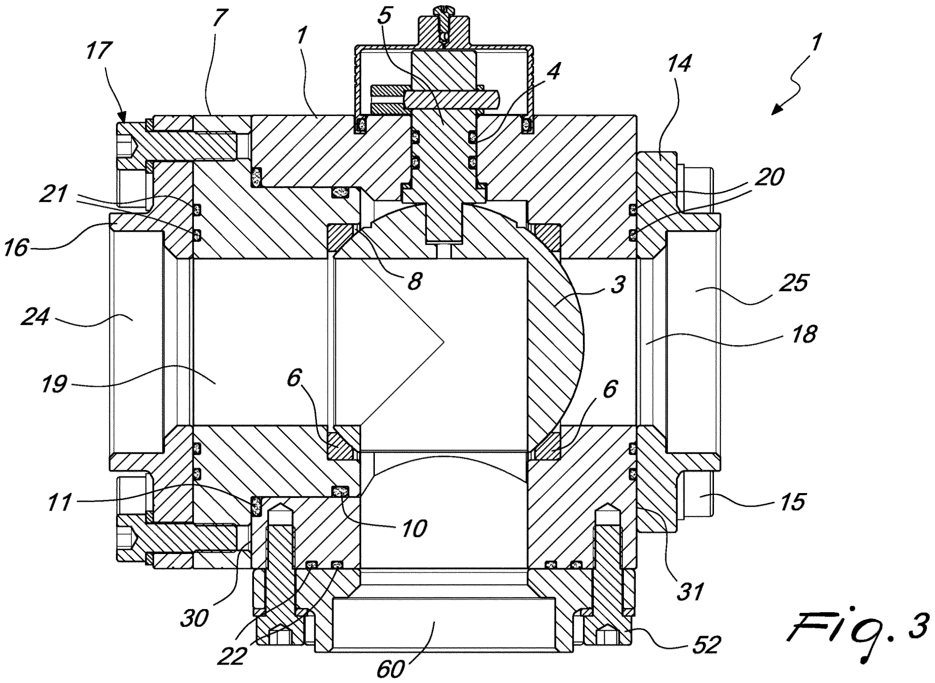

Figure 3 is a transverse cross-sectional view of the ball valve according to the present invention.

With reference to the figures, in which identical reference numerals refer to identical elements, the ball valve according to the present invention, generally designated by the reference numeral 100, comprises a three-way valve body 1 which has a seat 2 inside it for accommodating a three-way ball 3.

The first and the second way of the valve body are arranged on opposite sides from each other, on a same axis.

Conveniently, the valve body 1 of the valve is furthermore provided, along a vertical axis thereof, with a hole 4 for accommodating an actuation stem or element 5.

The third way of the valve body 1 is axially aligned with the hole 4, but at the opposite side.

The axis of the third way is perpendicular to the axis of the first and second way.

The seat 2 for accommodating the ball 3 further accommodates a sealing berth 6.

The ball 3 is conveniently milled to accommodate the actuation stem 5.

A sleeve 7, provided with a sealing berth 6, is arranged so as to close the opening 2 of the valve body 1.

The berth 6 is accommodated in a seat 8 of the sleeve 7.

A second berth 6 is arranged on the side opposite to the first berth 6, with respect to the ball 3.

The sleeve 7 is fixed to the valve body 1 using screws 9 which are screwed into threaded holes of the valve body 1.

The seal between the valve body 1 and the sleeve 7 is effected with a pair of O-rings, one O-ring radial seal 10 and one O-ring face seal 11.

The O-rings 10 and 11 are arranged in adapted seats which are dimensioned so that when the valve is assembled and the surface 12 of the sleeve 7 is in abutment on a surface (flat face) 30 of the valve body 1 facing the sleeve 7, the O-rings 10 and 11 are accommodated in chambers that are closed (during the coupling between the sleeve 7 and the valve body 1).

In this manner, the O-rings 10 and 11 cannot protrude externally from the respective seats as a result of pressure.

The valve body 1 therefore has two mutually opposite flat faces 30 and 31 respectively for coupling with the sleeve 7 and with an external flange 14 which is fixed with screws 15 to the valve body 1.

At the opposite end of the valve body 1, i.e. on the opposite end from the flange 14, there is a second flange 16 which is coupled to the sleeve 7, and is fixed thereto using screws 17.

Both of the flanges 14 and 16 have a central hole 18 and 19, respectively, which allows the passage of fluid.

A third flange 51 is arranged at the third way, coupled to a third flat face 40 of the valve body 1 by means of screws 52, and is provided with a central hole 60 for the passage of the fluid.

The seal of the external flanges 14, 16, 51 is obtained by pairs of O-rings 20, 21, 22, one pair for each flange, arranged concentrically and therefore of different diameters.

In this case too, with the flanges assembled, the O-rings 20, 21, 22 are defined in chambers that are sealed and closed, and they cannot be extruded outward by the pressure to which the valve according to the invention is subj ected.

The external flanges 14 and 16, on the opposite side to the side for coupling with the valve body 1 and with the sleeve 7, respectively, have pockets 24 and 25 for a pipe to be welded by an end user. It is a similar situation for the third flange 51 which has a pocket 26.

The ball valve with the actuation stem left open in a first position allows a passage of fluid from the third way to the first way and, when arranged in a second position, rotated 90 degrees with respect to the first position, allows a passage of fluid from the third way to the second way.

When the stem is in the closed position, the ball 3 prevents the flow of fluid because it forms a seal on the berths 6.

The valve must be connected to the air-conditioning or refrigeration system by following the steps below.

Firstly the external flanges 14, 16 and 51 must be unscrewed and removed from the valve body 1.

Once the flanges 14, 16 and 51 have been removed, they must be welded to the pipes to be connected. After welding, when the flanges 14, 16, 51 have cooled, the flanges are reconnected to the valve body 1 using the screws 15, 17 and 52.

Care needs to be taken in this step that the sealing O-rings 20 and 21 are correctly inserted in their dedicated seats.

In substance, the valve body 1 of the ball valve and the sleeve 7 are not welded to each other, but the seal between these two components is taken care of by the O-rings 10, 11, which are arranged in accommodation chambers that are closed so as to prevent the extrusion of the O-rings.

Since TIG welding is not necessary to close the valve, this avoids problems of damage to the elastomeric gaskets and to the berths as a consequence of possible overheating of the materials due to welding.

The absence of TIG welding results in fewer discards as a result of failed seals in production, and therefore drastically reduces the number of units that fail testing.

The lack of welding also ensures that the seal of the product is excellent over time.

In fact, given that there is no TIG welding, there also cannot be any non-visible blisters inside the ball valve that could result in leaks over time owing to the use of the valve according to the invention at high operating pressures (in particular, with refrigerant fluids such as R744).

Furthermore, the valve according to the invention makes it possible to render the welding of the pipes to the valve by the end user less problematic.

This occurs in fact simply by dismounting the flanges 14, 16 and 51.

In fact, while in traditional applications the installation technician has to weld/braze the pipes to the valve while enfolding it in a wetted rag and taking great care not to overheat it, the valve according to the invention makes it possible to weld/braze the pipes to the external flanges 14, 16 and 51 which were previously removed, in order to then remount the flanges with the pipes already welded to the valve body.

In this manner, the operation to weld/braze the pipes to the valve body is not problematic in any way and this operation is carried out without any special precaution regarding the overheating of the valve.

Furthermore, the valve can be removed from the plant if the need arises. In fact, when the valve needs to be replaced for any reason, for example because in particular situations the berths become worn out by repeated openings/closings, the replacement operation is very simple in that it is sufficient to remove the external flanges by loosening the connecting screws, extracting the valve body to be replaced, replacing the valve body, and connecting the latter to the external flanges by tightening the screws.

So it is not necessary, as in traditional solutions, to cut the copper or steel pipes that are connected to the valve body and then connect the new valve body by re-welding it to the pipes which, at this point, given that they have been cut, may now be too short for requirements.

In substance, therefore, the external flanges 14, 16, 51 remain always connected to the air-conditioning or refrigeration plant and can be removed from the valve body with simplicity.

The external flanges 14, 16, 51 can be made with female threading or with male threading in order to screw the valve to the plant using connectors (without welding the pipes).

The valve according to the invention can be made of many types of material, all- made of brass, all made of steel, or with parts made of brass mixed with parts made of steel, according to requirements.

The valve has, as mentioned, for every possible leak point, a pair of O-rings in order to have a doubly-guaranteed seal of the valve in the immediate lifetime, but especially over the whole lifetime, of the valve itself.

In practice it has been found that the ball valve according to the invention fully achieves the set aim and objects, in that it makes it possible to avoid TIG welds for closing the valve, and it further makes it unnecessary to weld the pipes to the valve, it being possible to remove the flanges and weld the pipes directly to those flanges, before remounting the flanges on the valve body.

This also enables the rapid replacement of the valve body, without needing to cut the pipes that are connected to the valve.

The valve thus conceived is susceptible of numerous modifications and variations, all of which are within the scope of the appended claims.

Moreover, all the details may be substituted by other, technically equivalent elements.

In practice, the materials used, as well as the contingent shapes and dimensions, may be any according to the requirements and to the state of the art.

The disclosures in Italian Utility Model Application No. 202023000005373 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A ball valve (100) for use in the air-conditioning and refrigeration sectors, which comprises a valve body (1) with a first and a second way arranged mutually opposite and a third way arranged according to an axis perpendicular to the axis of said first and second way, said valve body being provided with an accommodation seat (2) for a ball (3), a stem (5) being connected to said ball (3), through said valve body (1), for actuating said ball, a sleeve (7) being coupled at one end of said valve body (1), with the interposition of O-rings (10, 11) arranged in seats that are completely closed when said sleeve (7) is coupled to said valve body (1), said stem (5) being adapted to allow, when it is arranged in a first position, a passage of fluid from said third way to said first way and, when arranged in a second position, rotated 90 degrees with respect to said first position, to allow a passage of fluid from said third way to said second way.

2. The ball valve according to claim 1, **characterized in that** it comprises a pair of flanges (14, 16), one (14) of which is adapted to be coupled to the valve body (1) on one side and the other one (16) to said sleeve (7) on the opposite side, said flanges (14, 16) being screwed to said valve body (1) and to said sleeve (7), respectively, and a third flange (51) which is adapted to be coupled at said third way.

3. The ball valve according to claim 1 or 2, **characterized in that** said flanges (14, 16, 51) are coupled to said valve body (1) and to said sleeve (7) respectively by way of interposition of a pair of O-rings (20, 21, 22) accommodated in said seats which are completely closed when said flanges are coupled to said valve body (1) and to said sleeve (7).

4. The ball valve according to one or more of the preceding claims, **characterized in that** said flanges (14, 16, 51) respectively have a pocket (24, 25, 26) for coupling a pipe.

5. The ball valve according to one or more of the preceding claims, **characterized in that** said flanges (14, 16, 51) allow the coupling of a pipe by way of welding/brazing.

6. The ball valve according to one or more of the preceding claims, **characterized in that** said flanges (14, 16, 51) have a threading for coupling with a pipe or connector by screwing.

7. The ball valve according to one or more of the preceding claims, **characterized in that** said stem (5) has a pair of sealing gaskets between said stem and said valve body when said stem is mounted inside said valve body, for actuating said ball.

8. The ball valve according to one or more of the preceding claims, **characterized in that** said O-rings interposed between said sleeve (7) and said valve body (1) comprise an O-ring radial seal (10) and an O-ring face seal (11), said O-rings being accommodated in said seats which are completely closed when said sleeve (7) is mounted on said valve body (1).

9. The ball valve according to one or more of the preceding claims, **characterized in that** said sleeve (7) is fixed using screws to said valve body (1).

10. The ball valve according to one or more of the preceding claims, **characterized in that** said valve body (1) comprises a pair of berths (6) which are arranged mutually opposite, one of said berths (6) being accommodated in said sleeve (7).
